# EUROPÄISCHE PATENTSCHRIFT

(11) **EP 2 660 015 B1**
(45) Veröffentlichungstag und Bekanntmachung des Hinweises auf die Patenterteilung: **11.03.2015**
(21) Anmeldenummer: 12166334.8
(22) Anmeldetag: 02.05.2012
(51) Int. Cl.: B25J 15/00, B25J 15/08

(54) **Greifer**
Gripper
Poignée

(43) Veröffentlichungstag der Anmeldung: 06.11.2013
(73) Patentinhaber: GLP systems GmbH, 21079 Hamburg (DE)
(72) Erfinder: Hecht, Robert, Dr., 82418 Seehausen (DE); Ladda, Christian, 22299 Hamburg (DE)
(74) Vertreter: Raffay & Fleck

(56) Entgegenhaltungen:
- EP-A1- 0 170 479
- EP-A1- 2 390 068
- FR-A1- 2 436 650

## Beschreibung

Die Erfindung betrifft einen Greifer zum Manipulieren von, insbesondere röhrchenförmigen, Probengefäßen mit den Merkmalen des Oberbegriffs des Patentanspruchs 1.

Es ist bekannt, in der automatisierten Analyse von in Probengefäßen enthaltenen Proben, diese Probengefäße einzeln und maschinell zu ergreifen und zu versetzen, wozu entsprechende Greifer an Manipulationseinrichtungen, wie z.B. Manipulationsrobotern, zum Einsatz kommen. Als Beispiel hierzu ist insbesondere auf die moderne Labormedizin zu verweisen, wo röhrchenförmige Probengefäße mit darin enthaltenden Blutproben, Urinproben oder auch gelösten oder in fester Form vorliegenden Gewebeproben mit hohem Automatisierungsgrad verarbeitet, insbesondere den jeweils spezifischen Analysegeräten zugeführt und später in eine Archivierung übergeben werden.

Dabei ist es insbesondere üblich, in Bereichen, in denen eine Vielzahl von in Probengefäßen angeordneten Proben durchzusetzen sind, diese für eine Lagerung und/oder einen Transport dicht gepackt auf Probengefäßhaltern anzuordnen, beispielsweise auf Probentabletts oder sogenannten Probenracks, auf denen z.B. reagenzglasartige, röhrchenförmige Probengefäße mit sehr geringem Abstand zueinander nebeneinander in aufgerichteter Stellung, mit im Wesentlichen vertikal ausgerichteter Röhrchenlängsachse, angeordnet sind. Im Zuge einer automatisierten Weiterverarbeitung gilt es aus dieser Probengefäßanordnung mit einem Greifer gezielt ein einzelnes Probengefäß zu ergreifen und z.B. für eine Analyse an ein entsprechendes Analysegerät zu übergeben bzw. in ein Transportsystem für den Transport vereinzelter Probengefäße zu übergeben.

Dabei stellt sich nun die Problematik, dass aufgrund der dicht gepackten Anordnung einzelner Probengefäße für den Greifer nur geringer Raum zwischen den Probengefäßen zur Verfügung steht, in welchen die Greiferfinger zum Ergreifen des Probengefäßes eingebracht und in welchem sich diese bewegen können. Zudem ist in entsprechenden Manipulatorvorrichtungen der Raum insgesamt gering bemessen, weshalb der Greifer an sich typischerweise geringe Abmessungen aufweisen muss.

Bekannte Greifer weisen entweder Linearantriebe für die Greiferfinger auf, welche Linearantriebe vergleichsweise großen Bauraum beanspruchen und somit große und einer weitgehend kompakten und minierten Bauweise entsprechender Manipulatorvorrichtungen entgegenstehende Greifer bedingen.

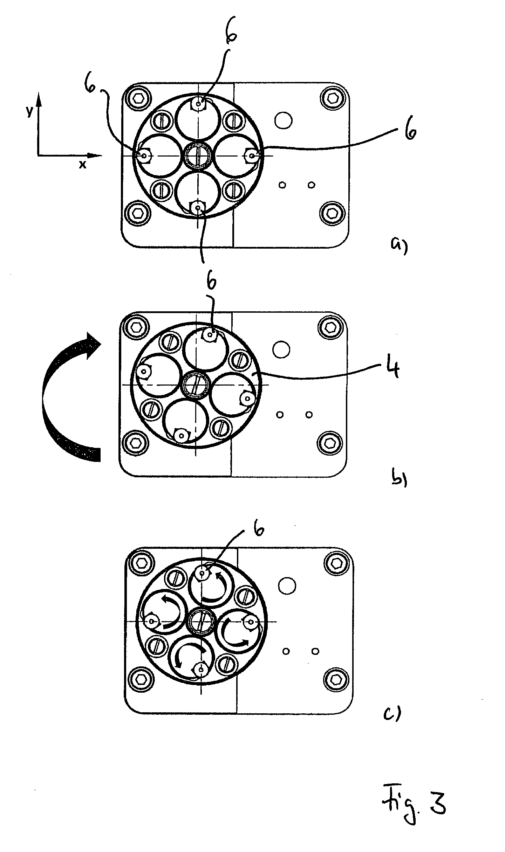

Alternativ arbeiten andere bekannte Greifertypen mit Kipp- oder Schwenkbewegungen der Greiferfinger bzw. ihrer Halteabschnitte. Ein solches Beispiel eines bekannten Greifers ist in der DD 242589 A1 offenbart. Dort sind einzelne Greiferfinger mit ihren rückwärtigen Enden in einer rotierbaren Greiferlagerung gelagert und in einem mittleren Abschnitt der Greiferfinger durch Öffnungen an der Greiferbasis hindurchgeführt. An ihren freistehenden Enden weisen die Greiferfinger Halteabschnitte auf. Durch eine Rotation der Greiferlagerung erfolgt ein Verkippen der Greiferfinger um ihre in der Durchführung durch die Greiferbasis befindlichen mittleren Abschnitte. Diese Kippbewegung kann gemäß einem Ausführungsbeispiel nach den dort gezeigten Figuren 3 und 4 durch eine entsprechende Langlochführung in einer Zustellbewegung linearisiert werden. Allerdings bleibt auch dort nach wie vor eine einen Kreisbogen in einer die Fingerlängsachse schneidenden Ebene geführte Anstellbewegung der Greiferfinger, die dazu führt, dass ergriffene Gegenstände nicht allein mit einer radial wirkenden Andruckkraft, sondern auch mit einer quer dazu gerichteten Scherkraft beaufschlagt werden, wenn die Greiferfinger auf der Oberfläche des zu ergreifenden Gegenstandes anliegen. Eine solche Scherkraft verringert nicht nur die Haltekraft, die sich allein aus der senkrecht zur Oberfläche des zu ergreifenden Gegenstandes wirkenden Kraftkomponente ergibt, sondern führt auch zu einem Risiko des Abgleitens der Greiferfinger von einem ergriffenen Objekt sowie zu dem Risiko einer Beschädigung aufgrund eines Abscherens.

Ein wie in den Merkmalen des Oberbegriffs des Patentanspruches 1 gebildeter Greifer ist in der DE 10 2010 019 348 A1 offenbart. Dort wird über einen in einem Zylinder bewegbaren Druckkolben mit darin ausgebildeten Gewindeführungen eine synchronisierte Rotationsbewegung von einzelnen Greiferfingern mit azentrisch zu der jeweiligen Rotationsachse angeordneten Halteabschnitten bewirkt, die eine rotatorische Zustellbewegung der Halteabschnitte der Greiferfinger zu einem zu ergreifenden Gegenstand bewirken. Der Nachteil einer solchen rotatorischen Zustellbewegung ist aber insbesondere dann gegeben, wenn der Raum, der zum Ergreifen eines Probengefäßes zur Verfügung steht, eng bemessen ist. Denn die rotatorische Anstellbewegung der Greiferfinger mit ihren Halteabschnitten ist eine weit ausladende, bei der beispielsweise zwischen in einem Probenrack dicht an dicht aufgestellten Probengefäßen eingebrachte Haltefinger mit zu dem zu ergreifenden Probengefäß benachbarten Probengefäßen kollidieren können. Ferner bewirkt die rein rotatorische Anstellung der Greiferfinger mit ihren Halteabschnitten wiederum eine quer zu der erwünschten radialen Haltekraft wirkende Scherkraft, die auf den zu ergreifenden Gegenstand, also das Probengefäß, aufgebracht wird, und weist somit die oben erläuterten Nachteile auf.

Hier soll mit der Erfindung Abhilfe geschaffen und ein Greifer der eingangs genannten Art angegeben werden, der mit geringem konstruktiv benötigten Bauraum das Ergreifen von Probengefäßen auch unter eng bemessenen räumlichen Bedingungen ermöglicht und der zudem ein sicheres Ergreifen der Probengefäße mit radial ausgerichteter Klemmkraft und ohne das Aufbringen von Scherkräften ermöglicht.

Diese Aufgabe wird gelöst durch einen Greifer zum Manipulieren von, insbesondere röhrchenförmigen, Probengefäßen mit den Merkmalen des Anspruches 1. Vorteilhafte Weiterbildungen eines solchen erfindungsgemäßen Greifers sind in den abhängigen Ansprüchen 2 bis 10 angegeben.

Erfindungsgemäß wird also ein Greifer der übereinstimmend mit dem bekannten Stand der Technik, insbesondere denjenigen nach der DE 10 2010 019 348 A1 folgendes aufweist:
- eine Greiferbasis;
- wenigstens zwei Greiferfinger, die jeweils einen Halteabschnitt zum Erfassen eines Probengefäßes aufweisen und jeweils um eine Fingerrotationsachse relativ zu der Greiferbasis verdrehbar an letztgenannter angeordnet sind und bei welchen die Halteabschnitt der Greiferfinger jeweils in Bezug auf die zugeordnete Fingerrotationsachse azentrisch angeordnet sind;
- einen ersten Antrieb zum Verdrehen der Greiferfinger, wobei die Greiferfinger derart miteinander gekoppelt sind, dass sie von dem Antrieb gleichzeitig und mit jeweils gleicher Rotationsgeschwindigkeit und -richtung angetrieben werden;
durch folgende Merkmale weitergebildet:
- die Greiferbasis ist an einem Grundkörper und relativ zu diesem um eine von den Fingerrotationsachsen verschiedene Basisrotationsachse drehbar angeordnet;
- der Greifer weist einen zweiten Antrieb zum Verdrehen der Greiferbasis relativ zu dem Grundkörper auf;
- es ist eine Steuereinrichtung vorgesehen zum Steuern der Antriebe, also des ersten und des zweiten Antriebes, derart, dass durch eine Bewegungskombination aus Verdrehen der Greiferfinger relativ zu der Greiferbasis und Verdrehen der Greiferbasis relativ zu dem Grundkörper für jeden der Halteabschnitte der Greiferfinger jeweils eine im Wesentlichen lineare Bewegung relativ zu dem Grundkörper resultiert.

Der Kerngedanke der Erfindung liegt mithin darin, durch eine Überlagerung von rotatorischen Bewegungen, nämlich zum einen einer Drehung der Greiferfinger mit exzentrisch zur Drehachse angeordneten Halteabschnitten relativ zu der Greiferbasis und zum anderen einer Rotation der Greiferbasis in einer gezielt gegenwirkenden Weise, eine resultierende Bewegung der Halteabschnitte der Greiferfinger erreicht wird, die relativ zu dem Grundkörper des Greifers eine lineare ist. Da typischerweise beim Manipulieren der röhrchenförmigen Probengefäße der Grundkörper des Greifers ortsfest zu einem zu ergreifenden Probengefäß positioniert bleibt, ergibt sich mithin eine lineare Zustellbewegung der Halteabschnitte der Greiferfinger an das Probengefäß bzw. eine entsprechende Linearbewegung in umgekehrter Richtung zum Freigaben eines ergriffenen Probengefäßes. Auf diese Weise wird durch die Kombination zweier mit einfachen und räumlich kompakt unterzubringenden Mitteln realisierbaren Rotationsantriebe eine Linearbewegung der Halteabschnitte der Greiferfinger erreicht, die mit entsprechenden Linearantrieben nur in deutlich mehr Raum einnehmender Bauweise zu verwirklichen wäre. Insbesondere wären bei mehr als zwei Greiferfingern entweder pro Greiferfinger ein eigener Linearantrieb vorzusehen, was die Anzahl der erforderlichen Antriebe und die Komplexität der hierfür vorzusehenden Steuerung erhöhen würde, oder es wäre eine entsprechend komplexe Kinematik durch eine beispielsweise über entsprechende Getriebe auf die entsprechenden Linearstellantriebe zu übertragende Antriebskraft zu schaffen. Im Gegensatz zu solch einer Lösung kann mit der Erfindung also mit einfachen und vergleichsweise kostengünstig aufzubauenden Einrichtungen ein Greifer mit in einer resultierenden linearen Zustellbewegungen der Halteabschnitte der Greiferfinger geschaffen werden, dessen jeweiligen Antriebe rein rotatorisch wirken. Durch die Realisierung der resultierenden Bewegung der Halteabschnitte der Greiferfinger als Linearbewegungen sind diese Bewegungen im Vergleich zu der rein rotatorischen Zustellbewegung beim Stand der Technik gemäß der DE 10 2010 019 348 A1 weit weniger raumgreifend, können also zielgerichtet und ohne eine etwaige Kollisionsgefahr mit benachbarten Probengefäßen auch im Bereich von eng gestellten Probengefäßen, wie beispielsweise einer engen Anordnung von Probenröhrchen auf einem Probenrack vorgenommen werden. Auch kann das Anstellen der Halteabschnitte der Greiferfinger rein radial, also senkrecht zu einer Oberfläche des zu ergreifenden Gegenstandes, wie insbesondere eines Probengefäßes, erfolgen, ohne Kipp- oder Schwenkbewegungen und damit verbundene quer wirkende Momente. Somit ergibt sich ein sicheres Greifen mit guten und definiert nur für das Halten wirkenden Haltekräften.

Die Antriebe für die beiden Drehbewegungen - Verdrehen der Greiferfinger und Verdrehen der Greiferbasis - können grundsätzlich auch mit einem Antriebsmotor und einer entsprechenden Aufteilung der von diesem erzeugten Antriebskraft auf die beiden Antriebe (in diesem Fall dann auch als Antriebsstränge aufzufassen) über z.B. eine entsprechende Getriebeanordnung realisiert werden. Bevorzugt, da in der Mechanik einfacher zu gestalten, werden jedoch getrennte Antriebsmotoren eingesetzt.

Die Steuereinrichtung zur entsprechenden Koordination der beiden Antriebe für die Drehbewegungen der Greiferfinger einerseits und für die korrelierte Rotationsbewegung der Greiferbasis andererseits kann grundsätzlich eine durch eine mechanische Getriebekopplung realisierte Steuereinrichtung sein. Da eine solche jedoch einen erheblichen konstruktiven Aufwand und nicht unerheblichen Bauraum erfordert, wird hier eine elektronische Steuerung von zwei getrennten Antriebsmotoren bevorzugt. Eine solche elektronische Steuerung ermöglicht im Übrigen deutlich mehr Freiheitsgrade bei der jeweils auszuführenden kombinierten Bewegung und einer einzustellenden resultierenden Bewegung der Greiferfinger bzw. ihrer Halteabschnitte. So kann durch eine solche Steuerung insbesondere dann, wenn die Mechanik der Rotation der Greiferfinger gekoppelt ist mit der Greiferbasis und bei einer entsprechenden Rotation der Greiferbasis in einer Drehbewegung der Greiferfinger resultiert, wie dies beispielsweise bei einer Umsetzung mit Hilfe eines Planetengetriebes der Fall sein kann, durch entsprechend gekoppelte Bewegungen auch eine resultierende Bewegung erreicht werden, bei der die Greiferbasis relativ zu dem Grundkörper rotiert wird mit einer entsprechend gesteuerten Gegenbewegung der Greiferfinger bzw. der Halteabschnitte relativ zu der Greiferbasis, so dass diese eine Griffposition an einem Probengefäß beibehalten und damit ein Probengefäß mit der Greiferbasis mit rotiert werden kann, ohne dass sein Griff gelöst wird (vgl. Anspruch 10). Dies ist z.B. dann von Vorteil, wenn ein mit einer entsprechenden Identifizierungskennung versehenes Probengefäß, z.B. ein solches mit einem aufgebrachten Barcode, vor einem Lesekopf eines Identifizierungsgerätes rotiert werden muss, um den entsprechenden Identifizierungscode auszulesen. So kann beispielsweise ein mit einem Barcode versehenes Probenröhrchen vor einem Barcodescanner mit dem erfindungsgemäßen Greifer um seine Längsachse rotiert werden, um den auf dem Probenröhrchen angeordneten Barcode durch den Barcodescanner auslesen zu können.

Der erfindungsgemäße Greifer bietet zudem mit der linear einzustellenden Zustell- bzw. "Loslass"-Bewegung den Vorteil, dass ein Probengefäß mit einer senkrecht zur Oberfläche (insbesondere radial, bei röhrchenförmigen Probengefäßen) wirkenden Haltekraft erfasst werden kann, die keinerlei quergerichteten Scherkraftanteile enthält. Solche rein senkrecht zur Oberflächenebene des Probengefäßes im Angriffpunkt gerichteten Greiferkräfte bedingen ein sicheres und positionsgetreues Ergreifen des Probengefäßes ohne die Gefahr, dass dieses durch ein Abrutschen aufgrund der Scherkräfte aus dem sicheren Griff gerät oder aber aufgrund des in einer Greifkraft ansonsten enthaltenen Scherkraftanteils ggf. Schaden nimmt.

Mit Vorteil sind die Fingerrotationsachsen und die Basisrotationsachse jeweils paarweise parallel zueinander angeordnet. Diese Anordnung ermöglicht eine besonders einfache Umsetzung der Erfindung.

Für einen symmetrischen Aufbau des Greifers mit symmetrisch bewegten Greiferfingern ist es von Vorteil, wenn die Basisrotationsachse zwischen den Halteabschnitten der Greiferfinger in gleichem Abstand zu diesen angeordnet ist. Dabei ist ferner von Vorteil, wenn die Greiferfinger mit ihren Halteabschnitten jeweils das gleiche Maß an Exzentrizität zu der jeweiligen Fingerrotationsachse aufweisen. Ferner ergibt sich ein besonders symmetrischer und insoweit zu bevorzugender Aufbau des Greifers dann, wenn in einer Ausgangsstellung die Halteabschnitte der Greiferfinger in einer Projektion auf eine senkrecht zu den Rotationsachsen liegenden Ebene einen gleichen Abstand zu der Basisrotationsachse aufweisen, die im Zentrum der Anordnung liegt.

Einen sicheren "Griff" übt der erfindungsgemäße Greifer insbesondere dann aus, wenn er wenigstens drei Greiferfinger aufweist. Derzeit wird dabei ein Greifer mit vier Greiferfingern bevorzugt. Die Greiferfinger liegen dabei mit Vorteil mit ihren Halteabschnitten in gleichmäßigen Winkelabständen um einen Mittelpunkt, der der gedachte Ursprung der im Wesentlichen linearen Bewegungen der Halteabschnitte ist, und in gleichem Abstand zu diesem Mittelpunkt angeordnet. Damit ergibt sich eine symmetrische Aufteilung der Greiferkräfte auf den Umfang des Probengefäßes und somit ein besonders sicherer Griff.

Wie bereits vorstehend erwähnt, ist eine besonders einfache konstruktive Lösung und Gestaltung des erfindungsgemäßen Greifers dann gegeben, wenn der erste Antrieb mit einer Antriebswelle gekoppelt ist, die über ein Planetengetriebe die Greiferfinger zum Verdrehen um die Fingerrotationsachse antreibt, wobei auf der Antriebswelle ein umfangsverzahntes Sonnenrad angeordnet ist, welches mit mit den Greiferfingern verbundenen umfangsverzahnten Planetenrädern kämmt. Wenn, wie dies mit Vorteil vorgesehen sein kann, die Planetenräder mit gleichen Durchmessern und gleicher Umfangsverzahnung gebildet sind, so ergibt sich eine gleichartige Kopplung und gleich gestaltete Bewegung der einzelnen Greiferfinger, mithin ein weiteres Maß an Symmetrie des Greifers in seiner Funktionalität.

Um bei einem erfindungsgemäßen Greifer einerseits die Positionierung der Halteabschnitte richtig bestimmen und voreinstellen zu können, andererseits die erforderliche Steuerung der für eine erwünschte resultierende Bewegung der Halteabschnitte der Greiferfinger miteinander zu korrelierenden Bewegungen ausreichend genau vornehmen zu können, ist es von Vorteil, wenn die Antriebe jeweils einen Motor mit Positions- und Drehzahlregelung aufweisen. Für eine weitere Steuerung eines erfindungsgemäßen Greifers können für die Motoren beispielsweise Stromaufnahmesensoren vorgesehen sein, die einen Anstieg des zum Betrieb der Antriebe aufgenommenen Stroms feststellen und daraus z.B. auf einen Kontakt der Halteabschnitte mit der zu ergreifenden Probe schließen. Durch diese Art der Sensorik kann der erfindungsgemäße Greifer mit einem automatischen Stoppmechanismus ausgestattet werden, der eine weitere Zustellbewegung der Greiferfinger bzw. Halteabschnitte in Richtung des zu ergreifenden Probengefäßes anhält, wenn ein Anstieg der Stromaufnahme der Motoren eine Anlage bzw. einen Kontakt der Halteabschnitte mit dem zu ergreifenden Objekt signalisiert. Selbstverständlich können auch über andere Sensoren entsprechende Steuerungsmechanismen vorgesehen sein, beispielsweise durch in den Halteabschnitten der Greiferfinger integrierte Kraftsensoren oder dgl.

Mit Vorteil sind die für das Verdrehen von Greiferfingern und Greiferbasis vorgesehenen Wellen kugelgelagert. Eine entsprechende Lagerung gestattet, dass diese hohe Kräfte aufnehmen kann bei gleichbleibend vernachlässigbar geringen Reibwiderständen. Dies ist wichtig, da für einen zuverlässigen Griff entsprechende Haltekräfte auf die mit den Greiferfingern zu ergreifenden Probengefäße aufzubringen sind. Die entsprechenden Kräfte müssen mit den Antrieben erzeugt werden. Dabei ermöglicht hier die kompakte Bauweise aufgrund der kurzen Hebel der bevorzugt zu verwendenden Zahnradpaarungen des Planetengetriebes die Übertragung der hohen Kräfte, die durch die Kugellagerungen gut abgefangen werden. Darüber hinaus bieten die Kugellagerungen wegen ihrer exakten Lagerung eine fein einstellbare Positionierung der gesamten Mechanik, was für die durch die Kombination der beiden rotatorischen Antriebe bedingte, über die Steuereinrichtung eingestellte Kombinationsbewegung von hoher Wichtigkeit ist. Auch erlaubt die reibungsarme Lagerung eine sehr sensible Weiterleitung eines Anstieges von Widerständen bzw. Gegenkräften in dem System, so dass mit einer sehr feinen Toleranzschwelle beispielsweise das Anliegen der Halteabschnitte an einem zu ergreifenden Probengefäß erkannt werden kann, wie dies oben z.B. anhand einer vergrößerten Stromaufnahme der Antriebsmotoren beschrieben ist.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: in einer schematischen Seitenansicht ein Ausführungsbeispiel eines erfindungsgemäßen Greifers;
- Fig. 2: eine Ansicht des Greifers von unten; und
- Fig. 3: in drei verschiedenen Darstellungen a bis c Ansichten des Greifers von unten zur Erläuterung der kombinierten Kinematik zur Erzeugung der linearen Zustellbewegungen der Greiferfinger bzw. ihrer Halteabschnitte.

In den Figuren ist schematisch und ohne Darstellung sämtlicher Details ein Ausführungsbeispiel eines erfindungsgemäßen Greifers dargestellt und wird nachstehend unter Bezugnahme auf die Figuren erläutert.

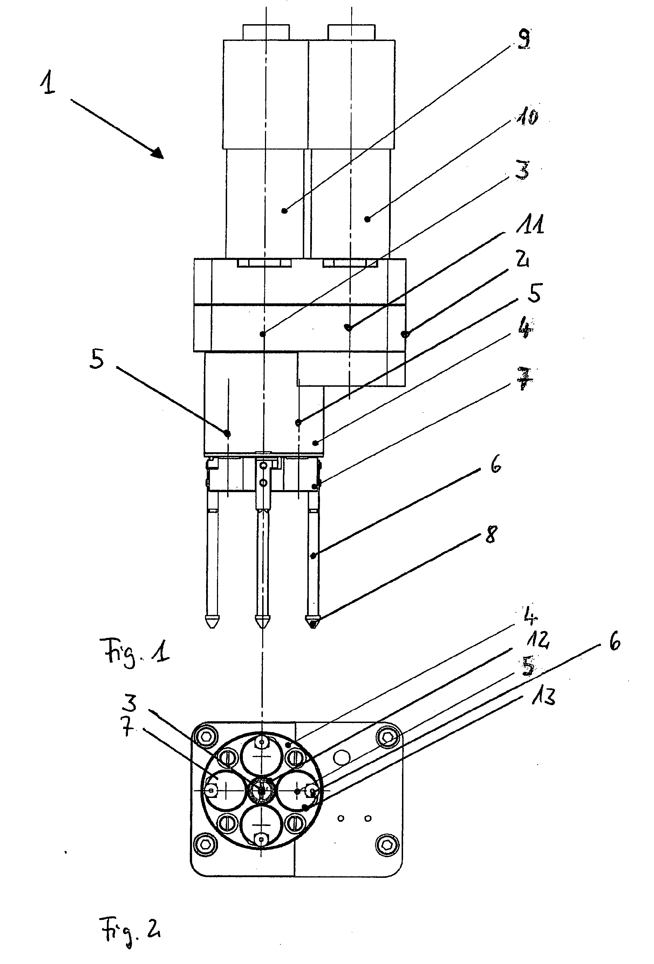

Zunächst wird unter Bezugnahme auf die Darstellungen der Figuren 1 und 2 der strukturelle Aufbau des erfindungsgemäßen Greifers dargelegt. Dort ist ein Greifer 1 der erfindungsgemäßen Machart dargestellt. Dieser Greifer 1 hat einen Grundkörper 2, an welchem um eine Basisrotationsachse 3 relativ zu dem Grundkörper 2 verdrehbar eine Greiferbasis 4 angeordnet ist. An der Greiferbasis 4 wiederum sind um Fingerrotationsachsen 5 verdrehbar Greiferfinger 6, in diesem Ausführungsbeispiel insgesamt vier Greiferfinger 6, angeordnet. Die Greiferfinger 6 erstrecken sich längs einer Richtung parallel zu den Fingerrotationsachsen 5, die ihrerseits parallel zueinander und parallel zu der Basisrotationsachse 3 liegen. Mit Bezug zu den Fingerrotationsachsen 5 sind die Greiferfinger 6 azentrisch auf jeweiligen Fingerbasen 7 angeordnet. An ihren freien Enden weisen die Greiferfinger 6 Halteabschnitte 8 mit radialen Verdickungen auf, mit denen die Greiferfinger 6 an einem zu erfassenden Probengefäß im Betrieb angreifen.

Auf der der Greiferbasis 4 gegenüberliegenden Seite des Grundkörpers 2 sind an diesem fest angeordnet zwei Antriebsmotoren 9 und 10. Der erste Antriebsmotor 9 treibt eine entlang der Basisrotationsachse 3 geführte, hier nicht näher dargestellte Welle an, wohingegen der zweite Antriebsmotor 10 eine parallel zu der Welle des ersten Antriebsmotors gelegene zweite Welle, die sich entlang einer Antriebsachse 11 erstreckt und ebenfalls nicht näher dargestellt ist, antreibt. Am Ende der mit dem ersten Antriebsmotor 9 verbundenen Welle sitzt ein wie in Fig. 2 zu erkennendes Sonnenrad 12 eines Planetengetriebes, welches mit seiner Umfangsverzahnung mit Planetenrädern 13 kämmt, die an der Fingerbasis 7 eines jeden Greiferfingers 6 ausgebildet sind.

So wird durch eine Rotation des Sonnenrades 12, angetrieben durch den Antriebsmotor 9, in eine erste Umlaufrichtung ein Umlauf sämtlicher Fingerbasen 7 in entgegengesetzter Richtung bewirkt. Dabei sind die Planetenräder 13 der Fingerbasen 7 mit gleichem Durchmesser und identischer Umfangsverzahnung gebildet, so dass sie in einem Verhältnis 1:1 im Vergleich zueinander durch das Sonnenrad 12 angetrieben werden. Dabei ist in den Figuren 1 und 2 eine Situation mit am weitesten geöffneten Greiferfingern 6 dargestellt, die also in dieser Position am äußersten möglichen Rand der Greiferbasis 4 angeordnet sind und jeweils mit gleichem Abstand zu der Basisrotationsachse 3, die im Zentrum des Sonnenrades 12 verläuft.

Eine Rotation der Greiferbasis 4 um die Basisrotationsachse 3 kann durch den zweiten Antriebsmotor 10 hervorgerufen werden. So ist an der mit diesem Antriebsmotor verbundenen Antriebswelle ein hier nicht näher dargestelltes Antriebsritzel angeordnet, welches mit einer Umfangsverzahnung an der Greiferbasis 4 kämmt, welche Umfangsverzahnung ebenfalls nicht näher dargestellt ist. Durch diese Gestaltung kann also betrieben durch den Antriebsmotor 10 die Greiferbasis 4 je nach Laufrichtung des Antriebsmotors in die eine oder andere Richtung um die Basisrotationsachse 3 verdreht werden, in der Blickrichtung gemäß Fig. 2 im oder gegen den Uhrzeigersinn.

Nun soll die Funktionsweise und Antriebskinematik des erfindungsgemäßen Greifers 1 unter Bezugnahme auf die Darstellungen in Fig. 3 erläutert werden. Fig. 3 zeigt in unterschiedlichen Darstellungen a bis c die Greiferbasis bzw. die Fingerbasen und die daran angeordneten Greiferfinger in unterschiedlichen Positionen. Diese Figur dient der Erläuterung der Funktionsweise der über die zum Greifer 1 gehörige, hier nicht näher dargestellte Steuereinrichtung korrelierten Rotationsbewegungen der Greiferbasis sowie der Fingerbasen zum Erhalt einer resultierenden Linearbewegung der Greiferfinger bzw. ihre Halteabschnitte relativ zu dem Basiskörper. Zur Vereinfachung der Erläuterung ist im Bereich Abbildung 3a ein zweidimensionales Koordinatensystem mit x- und y-Achsen eingetragen.

Die Fig. 3a zeigt eine Ansicht entsprechend der Fig. 2 mit den vier Greiferfingern 6 in weitest möglich gespreizter und mithin voneinander entfernter Position.

Die Figuren 3b und 3c erläutern nun in nacheinander folgend dargestellten Schritten die Bewegungen, die zum Schließen des Greifers, d.h. aufeinander zu Bewegen der Greiferfinger 6 entlang einer linearen Bewegungsrichtung, gekoppelt werden über die Steuereinrichtung. Zunächst ist hierbei eine Rotation der Greiferbasis 4 in der durch den Pfeil angedeuteten Richtung im Uhrzeigersinn angedeutet. Durch diese Rotation bewegen sich die Greiferfinger sowohl in x- als auch in y-Richtung, sie beschreiben einen Kreisbogen als Bewegungslinie.

Um nun eine Linearbewegung zu erhalten wird entsprechend durch die Steuereinrichtung initiiert und simultan zusätzlich zu der durch den Antriebsmotor 10 ausgelösten Rotationsbewegung der Greiferbasis 4 im Uhrzeigersinn eine durch den durch den Antriebsmotor 9 angetriebene Gegenbewegung der Fingerbasen gegen den Uhrzeigersinn vorgenommen, wie dies in Fig. 3c als hier künstlich vereinzelt dargestellter separater Schritt gezeigt und durch die Bewegungspfeile veranschaulicht ist. Wie gut zu erkennen ist, kann diese Gegenbewegung so gesteuert werden, dass die Greiferfinger 6 auf den in den Figuren fadenkreuzartig gezeigten, im Mittelpunkt der Anordnung der Greiferfinger 6, übereinstimmend mit der Lage der Basisrotationsachse sich kreuzenden Linien bleiben. Ein Vergleich der Figuren 3a und 3c zeigt dabei, dass sich die Greiferfinger 6 in linearer Richtung in Richtung dieses Zentrums bewegt haben, dass der Greifer also mit linear bewegten Greiferfingern 6 schließt. Eine weitere Bewegung der Greiferbasis im Uhrzeigersinn mit Nachführung der Fingerbasen entgegen dem Uhrzeigersinn mit korrelierten Antriebsgeschwindigkeiten und Stellwegen führt dann zu einer weiteren linearen Schließbewegung der Greiferfinger 6. Auf diese Weise werden die Greiferfinger 6 aufeinander zu geführt, bis sie ein Probengefäß erfassen. Bei einer Bewegung in umgekehrter Richtung, erneut korreliert zwischen dem Antrieb der Greiferbasis 4 und dem Antrieb der Fingerbasen erfolgt dann ein lineares voneinander weg Bewegen der Greiferfinger 6 zum Öffnen des Greifers. Durch die Anordnung des Planetengetriebes zum Antrieb der Greiferbasen ist sichergestellt, dass die sich Greiferfinger gleichmäßig auf das Zentrum, in dem hier die Basisrotationsachse liegt, zu bzw. von dieser weg bewegen, mithin ein symmetrischer Schließ- bzw. Öffnungsweg der Greiferfinger bzw. ihre Halteabschnitte sich ergibt.

Auf ähnliche Weise kann durch eine korrelierte Bewegung der Greiferbasis 4 und der Fingerbasen 7 und damit der Greiferfinger 6 erreicht werden, dass die Greiferfinger mit gleichem Abstand zu dem gedachten Zentrum relativ zu dem Grundkörper drehen, mithin eine Rotation eines ergriffenen Probengefäßes vorgenommen werden kann, ohne dieses aus dem Griff des Greifers zu lösen.

Aus der vorstehenden Beschreibung ist noch einmal deutlich geworden, welchen Vorteil und Nutzen der erfindungsgemäße Greifer mit sich bringt. Insbesondere wird deutlich, dass der Greifer kompakt gestaltet werden kann mit vollständig linear geführten und ohne jedwede Kipp- oder Schwenkbewegung greifenden Greifern, was insbesondere die bei Greifern der bekannten Bauart der eingangs zitierten Art stets auftretenden Scherkräfte bzw. Schermomente beim Angreifen an einem Probengefäß vermeidet und hier zu einem sicheren Griff ohne eine mögliche Beschädigung des ergriffenen Probengefäßes führt.

### Bezugszeichenliste

- 1: Greifer
- 2: Grundkörper
- 3: Basisrotationsachse
- 4: Greiferbasis
- 5: Fingerrotationsachse
- 6: Greiferfinger
- 7: Fingerbasis
- 8: Halteabschnitt
- 9: Antriebsmotor
- 10: Antriebsmotor
- 11: Antriebsachse
- 12: Sonnenrad
- 13: Planetenrad

## Patentansprüche

1. Greifer zum Manipulieren von, insbesondere röhrchenförmigen, Probengefäßen mit einer Greiferbasis (4), wenigstens zwei je einen Halteabschnitt (8) zum Erfassen eines Probengefäßes aufweisenden, jeweils um eine Fingerrotationsachse (5) relativ zu der Greiferbasis (4) verdrehbar an der Greiferbasis (4) angeordneten Greiferfingern (6), wobei die Halteabschnitte (8) der Greiferfinger (6) jeweils in Bezug auf die zugeordnete Fingerrotationsachse (5) azentrisch angeordnet sind, und mit einem ersten Antrieb (9) zum Verdrehen der Greiferfinger (6), wobei die Greiferfinger (6) derart miteinander gekoppelt sind, dass sie von dem Antrieb (9) gleichzeitig und mit jeweils gleicher Rotationsgeschwindigkeit und -richtung angetrieben werden, **dadurch gekennzeichnet, dass** die Greiferbasis (4) an einem Grundkörper (2) und relativ zu diesem um eine von den Fingerrotationsachsen (5) verschiedene Basisrotationsachse (3) drehbar angeordnet ist, dass ein zweiter Antrieb (10) zum Verdrehen der Greiferbasis (4) relativ zu dem Grundkörper (2) vorgesehen ist und dass eine Steuereinrichtung vorgesehen ist zum Steuern der Antriebe (9, 10) derart, dass durch eine Bewegungskombination aus Verdrehen der Greiferfinger (6) relativ zu der Greiferbasis (4) und Verdrehen der Greiferbasis (4) relativ zu dem Grundkörper (2) für jeden der Halteabschnitte (8) der Greiferfinger (6) jeweils eine im Wesentlichen lineare Bewegung relativ zu dem Grundkörper (2) resultiert.

2. Greifer nach Anspruch 1, **dadurch gekennzeichnet, dass** die Fingerrotationsachsen (5) und die Basisrotationsachse (3) jeweils paarweise parallel zueinander liegen.

3. Greifer nach einem der vorhergehenden Ansprüche, **dadurch gekennzeichnet, dass** die Basisrotationsachse (3) zwischen den Halteabschnitten (8) der Greiferfinger (6) in gleichem Abstand zu diesen angeordnet ist.

4. Greifer nach einem der vorhergehenden Ansprüche, **dadurch gekennzeichnet, dass** er wenigstens drei, insbesondere vier, Greiferfinger (6) aufweist.

5. Greifer nach Anspruch 4, **dadurch gekennzeichnet, dass** die Greiferfinger (6) mit ihren Halteabschnitten (8) in gleichmäßigen Winkelabständen um einen Mittelpunkt, der gedachter Ursprung der im Wesentlichen linearen Bewegungen der Halteabschnitte (8) ist, und in gleichem Abstand zu diesem Mittelpunkt angeordnet sind.

6. Greifer nach einem der vorhergehenden Ansprüche, **dadurch gekennzeichnet, dass** der erste Antrieb (9) mit einer Antriebswelle gekoppelt ist, die über ein Planetengetriebe die Greiferfinger (6) zum Verdrehen um die Fingerrotationsachsen (5) antreibt, wobei auf der Antriebswelle ein umfangverzahntes Sonnenrad (12) angeordnet ist, welches mit mit den Greiferfingern (6) verbundenen umfangsverzahnten Planetenrädern (13) kämmt.

7. Greifer nach Anspruch 6, **dadurch gekennzeichnet, dass** die Planetenräder (13) mit gleichen Durchmessern und gleicher Umfangsverzahnung gebildet sind.

8. Greifer nach einem der vorhergehenden Ansprüche, **dadurch gekennzeichnet, dass** die Antriebe (9, 10) jeweils einen Motor mit Positions- und Drehzahlregelung aufweisen.

9. Greifer nach einem der vorhergehenden Ansprüche, **dadurch gekennzeichnet, dass** für das Verdrehen von Greiferfingern (6) und Greiferbasis (4) vorgesehenen Wellen kugelgelagert sind.

10. Greifer nach einem der vorhergehenden Ansprüche, **dadurch gekennzeichnet, dass** die Steuereinrichtung weiterhin zu einem derartigen Steuern des ersten (9) und des zweiten Antriebes (10) eingerichtet ist, dass diese zu einem Verdrehen der Greiferbasis (4) relativ zu dem Grundkörper (2) bei gleichzeitiger Beibehaltung der Stellung der Halteabschnitte (8) entlang eines gedachten linearen Bewegungsweges zusammenwirken.

## Claims

1. A gripper for manipulating sample containers, in particular in the form of small tubes, with a gripper base (4), at least two gripper fingers (6) arranged on the gripper base (4) and respectively rotatably around a finger rotation axis (5) with respect to the gripper base (4) and including each one retaining portion (8) for detecting a sample container, whereas the retaining portions (8) of the gripper fingers (6) respectively are arranged acentrically with respect to the associated finger rotation axis (5), and with a first drive (9) for rotating the gripper fingers (6), whereas the gripper fingers (6) are coupled together in such a way that they are driven (9) simultaneously and with respectively the same rotational velocity and speed, **characterised in that** the gripper base is arranged rotatably on a base body (2) and with respect to the said around a base rotation axis (3) which is different from the finger rotation axes (5), that a second drive (10) is provided for rotating the gripper base (4) with respect to the base body (2) and that a control device is provided for controlling the drives (9, 10) in such a way that the result is substantially a linear movement with respect to the base body (2) further to a movement combination of the rotation of the gripper fingers (6) with respect to the gripper base (4) and of the rotation of the gripper base (4) with respect to the base body (3) for each of the retaining portions (8) of the gripper fingers (6).

2. A gripper according to claim 1, **characterised in that** the finger rotation axes (5) and the base rotation axis (3) lie respectively parallel to each other in pairs.

3. A gripper according to any of the preceding claims, **characterised in that** the base rotation axis (3) is arranged between the retaining portions (8) of the gripper fingers (6) at the same distance thereto.

4. A gripper according to any of the preceding claims, **characterised in that** it contains at least three, in particular four gripper fingers (6).

5. A gripper according to claim 4, **characterised in that** the gripper fingers (6) are situated with their retaining portions (8) around a centre, which is considered as the origin of the substantially linear movement of the retaining portions (8), in regular angular distances and at the same distance with respect to said centre.

6. A gripper according to any of the preceding claims, **characterised in that** the first drive (9) is coupled with a drive shaft, which drives the gripper fingers (6) via a planetary transmission for rotating around the finger rotation axes (5), whereas a circumferentially toothed sungear (12) is arranged on the drive shaft, a sungear which meshes with circumferentially toothed planetary gears (13) associated with the gripper fingers (6).

7. A gripper according to claim 6, **characterised in that** the planetary gears (13) are formed with the same diameters and the same circumferential toothing.

8. A gripper according to any of the preceding claims, **characterised in that** the drives (9, 10) have respectively a motor with position and rotational speed control.

9. A gripper according to any of the preceding claims, **characterised in that** the shafts provided for rotating the gripper fingers (6) and gripper base (4) are mounted on ball bearings.

10. A gripper according to any of the preceding claims, **characterised in that** the control device is designed moreover to control the first (9) and the second drive (10) in such a way that said drives cooperate for rotating the gripper base (4) with respect to the base body (2) while maintaining the position of the retaining portions (8) along a considered linear movement path.

## Revendications

1. Mâchoires permettant de manipuler des récipients d'échantillons, en particulier en forme de petit tube, avec une base de mâchoires (4), au moins deux doigts de mâchoire (6) avec chacun une section de retenue (8) pour détecter un récipient d'échantillons, doigts disposés respectivement autour d'un axe de rotation des doigts (5) par rapport à la base de mâchoires (4) et en rotation au niveau de la base de mâchoires (4), où les sections de retenue (8) des doigts de mâchoire (6) sont disposées de manière acentrique, respectivement par rapport à l'axe (5) de rotation des doigts associé, et avec un premier entraînement (9) pour faire tourner les doigts de mâchoire (6), où les doigts de mâchoire (6) sont couplés les uns aux autres de telle sorte qu'ils sont entraînés par le système d'entraînement (9) simultanément et avec respectivement la même vitesse et la même direction de rotation, **caractérisées en ce que** la base de mâchoires (4) est montée sur un corps de base (2) et rotative par rapport audit corps de base autour d'un axe de rotation de base (3) différent des axes de rotation des doigts (5), qu'un second entraînement (10) est prévu pour faire tourner la base des mâchoires (4) par rapport au corps de base (2) et qu'un dispositif de commande est prévu pour la commande des systèmes d'entraînement (9, 10) de telle sorte que l'on obtient un mouvement sensiblement linaire par rapport au corps de base (2) grâce à une combinaison de mouvements de rotation des doigts de mâchoire (6) par rapport à la base de mâchoires (4) et de rotation de la base de mâchoires (4) par rapport au corps de base (2) pour chacune des sections de retenue (8) des doigts de mâchoire (6).

2. Mâchoires selon la revendication 1, **caractérisées en ce que** les axes de rotation des doigts (5) et l'axe de rotation de base (3) sont parallèles l'un à l'autre par groupe de deux.

3. Mâchoires l'une quelconque des revendications précédentes, **caractérisées en ce que** l'axe de rotation de base (3) est disposé entre les sections de retenue (8) des doigts de mâchoire (6) à égale distance de ces derniers.

4. Mâchoires l'une quelconque des revendications précédentes, **caractérisées en ce qu'**elles présentent au moins, en particulier quatre doigts de mâchoire (6).

5. Mâchoires selon la revendication 4, **caractérisées en ce que** les doigts de mâchoire (6) sont disposés avec leurs sections de retenue (8) à égale distance angulaire par rapport à un point central, qui constitue l'origine des mouvements sensiblement linéaire des sections de retenue (8), et à égale distance par rapport à ce point central.

6. Mâchoires l'une quelconque des revendications précédentes, **caractérisées en ce que** le premier système d'entraînement (9) est couplé avec un arbre d'entraînement, qui entraîne les doigts de mâchoire (6) pour faire les tourner autour des axes de rotation des doigts (5) par le biais d'un engrenage planétaire, où une roue solaire (12) à denture périphérique est disposée sur arbre d'entraînement qui s'engrène dans des roues planétaires (13) à denture périphérique reliées aux doigts de mâchoire (6).

7. Mâchoires selon la revendication 6, **caractérisées en ce que** les roues planétaires (13) sont conçues avec les mêmes diamètres et la même denture périphérique.

8. Mâchoires l'une quelconque des revendications précédentes, **caractérisées en ce que** les systèmes d'entraînement (9, 10) présentent respectivement un moteur avec régulation de position et de vitesse de rotation.

9. Mâchoires l'une quelconque des revendications précédentes, **caractérisées en ce que** des arbres sont montés sur roulements à billes et prévus pour faire tourner les doigts de mâchoire (6) et la base de mâchoires (4).

10. Mâchoires l'une quelconque des revendications précédentes, **caractérisées en ce que** le dispositif de commande est en outre conçu pour assurer la commande du premier (9) et du second système d'entraînement (10) de telle sorte que ces systèmes d'entraînement coopèrent pour faire tourner la base de mâchoires (4) par rapport au corps de base (2) tout en maintenant la position des sections de retenue (8) le long d'un trajet considéré comme linéaire.
